# FASCICULE DE BREVET EUROPEEN

(11) **EP 3 127 411 B1**
(45) Date de publication et mention de la délivrance du brevet: **07.10.2020**
(21) Numéro de dépôt: 16182634.2
(22) Date de dépôt: 03.08.2016
(51) Int. Cl.: A01B 15/18, A01B 13/08

(54) **OUTIL ET DISPOSITIF DE FISSURATION À COUTRE**
WERKZEUG UND VORRICHTUNG ZUR FURCHENBILDUNG MIT EINEM SECH
CRACKING TOOL AND DEVICE WITH COULTER

(30) Priorité: 03.08.2015 FR 1557505
(43) Date de publication de la demande: 08.02.2017
(73) Titulaire: Carbure Technologies, 49400 Saumur (FR)
(72) Inventeur: DUMOULIN, Tom, 49400 SAUMUR (FR)
(74) Mandataire: Nony

(56) Documents cités:
- WO-A1-2015/033318
- FR-A- 658 929
- US-A- 1 221 915
- US-A- 4 799 823
- US-A- 5 165 487
- US-B1- 6 363 871
- US-B1- 7 588 091

## Description

La présente invention concerne un outil de fissuration à coutre, destiné à être fixé sur un étançon et un dispositif de fissuration ainsi obtenu. L'invention concerne plus particulièrement un outil de fissuration à coutre, destiné à être fixé sur l'étançon d'un déchaumeur ou d'un décompacteur. Un tel outil est destiné à fissurer et décompacter la terre pour casser la semelle de labour afin de permettre aux racines des plantes de trouver plus facilement l'humidité, ce qui améliore leur croissance et le rendement. À cet effet, lors de son utilisation, un outil de fissuration entre classiquement d'environ 35 cm dans le sol.

Dans le domaine des dispositifs de fissuration de la terre, un coutre est une partie d'un outil fixé à un étançon, par exemple d'un déchaumeur ou d'un décompacteur, qui sert à fendre la terre et la fissurer. Le coutre forme généralement l'arrête frontale de l'outil, dans la direction d'avancée de l'outil dans la terre (ou bord d'attaque). Ce coutre est ainsi soumis à des efforts importants qui conduisent à son usure prématurée, notamment par rapport aux éventuelles autres parties actives de l'outil fixé à l'étançon. Cependant, lorsque le coutre d'un outil est élimé, l'outil perd une part importante de son efficacité et il est alors préférable de remplacer l'outil. Ce remplacement complet de l'outil présente un coût très important pour l'utilisateur.

US 7,588,091 décrit un exemple de dispositif de fissuration comportant un étançon sur lequel est fixé un outil de fissuration, l'outil comportant un support de fixation, pour fixer de manière détachable l'outil sur l'étançon, et un coutre, monté de manière détachable sur le support de fixation.

Il existe un besoin pour un nouvel outil de fissuration perfectionné, ne présentant pas les inconvénients susmentionnés.

À cette fin, l'invention propose un dispositif de fissuration selon la revendication 1..

Ainsi, avantageusement, lorsque le coutre de l'outil est usé, il n'est plus nécessaire de remplacer tout l'outil, mais uniquement le coutre. Ceci présente une économie substantielle pour l'utilisateur.

Selon des modes de réalisation préférés, l'outil de fissuration selon l'invention présente une ou plusieurs des caractéristiques suivantes, prises seules ou en combinaison :
- le coutre comporte un bord d'attaque, de préférence en carbure de tungstène ;
- le coutre est fixé sur le support de fixation au moyen d'au moins une vis traversant un trou dans le coutre et reçue dans un taraudage du support de fixation et/ou d'au moins une goupille reçue dans des trous borgnes réalisés dans le coutre et le support de fixation ;
- le coutre forme un renfoncement recevant une extrémité du support de fixation, destinée à être orientée vers le fond du sol à fissurer ;
- le support de fixation comporte une portion sensiblement plane, sur laquelle est fixée le coutre le cas échéant, et un bord, de préférence plus large, formant le chant arrière du support de fixation, destiné à être en contact avec l'étançon ;
- le support de fixation présente des encoches dans lesquels débouchent les trous longitudinaux ;
- le support de fixation présente des reliefs dont la largeur s'étend perpendiculairement au plan médian du support de fixation, pour protéger les têtes des boulons de fixation de l'outil sur l'étançon, les reliefs étant par exemple réalisés au moyen de lames fixées sur le support de fixation ;
- une pointe est fixée sur une extrémité inférieure du support de fixation ;
- une pointe est fixée sur le coutre ;
- les moyens de fixation de la pointe sur le support de fixation permettent de régler la position de la tête de la pointe, par rapport au coutre le cas échéant ;
- l'outil de fissuration comporte un ergot présentant un bord d'attaque, disposé sous le support de fixation en cours d'utilisation de l'outil, l'ergot étant par exemple monobloc avec la pointe, le cas échéant ;
- le support de fixation présente des languettes latérales définissant avec le chant arrière du support de fixation un logement de réception de l'étançon ;
- l'outil de fissuration comporte au moins une, de préférence deux ailettes s'étendant de part et d'autre du support de fixation ;
- les ailettes sont fixées ensemble sur le support de fixation ;
- les ailettes peuvent être fixées à différente hauteur sur le support de fixation, ce dernier présentant par exemple plusieurs séries de trous aptes à être traverser par des boulons de fixation des ailettes ;
- les ailettes sont monoblocs, définissant un aileron présentant, de préférence, un renfoncement entre les deux ailettes pour recevoir l'étançon ; et
- le coutre présente deux joues latérales s'étendant dans une direction opposée au bord d'attaque, le support de fixation, et l'étançon le cas échéant, s'étendant entre les deux joues latérales.

Selon des modes de réalisation préférés, le dispositif de fissuration d'un sol selon l'invention comporte une ou plusieurs des caractéristiques suivantes, prises seules ou en combinaison :
- le dispositif de fissuration comporte un dispositif de descente de semis ;
- le dispositif de descente de semis présentant au moins un orifice d'alimentation en semis, par exemple deux orifices d'alimentation en semis, et au moins un orifice de sortie pour les semis, notamment deux orifices de sortie pour les semis ;
- le coutre est fixé au moyen d'un boulon s'étendant entre ses deux joues, le boulon étant disposé d'un côté de l'étançon opposé au bord d'attaque du coutre, une pièce d'appui étant de préférence montée sur le boulon et prenant appui sur le chant arrière de l'étançon ou de la plaque fixée sur le chant arrière de l'étançon, le cas échéant.

D'autres caractéristiques et avantages de l'invention apparaitront encore à la lecture de la description détaillée qui va suivre et à l'examen du dessin schématique dans lequel :
- La figure 1 illustre en coupe longitudinale un premier exemple de dispositif de fissuration d'un sol ;
- La figure 2 illustre en vue de côté un deuxième exemple de dispositif de fissuration d'un sol ;
- La figure 3 représente une vue en perspective d'un troisième exemple de dispositif de fissuration d'un sol ;
- La figure 4 est une vue de côté d'un quatrième exemple de dispositif de fissuration d'un sol ;
- Les figures 5 à 7 représentent des vues de côté de différents exemples de dispositifs de fissuration d'un sol ;
- La figure 8 est une vue en perspective arrière d'un autre exemple de dispositif de fissuration d'un sol ;
- La figure 9 représente un autre exemple de dispositif de fissuration d'un sol, vu en perspective ;
- La figure 10 représente un autre exemple de dispositif de fissuration d'un sol, vu en perspective ; et
- La figure 11 est une vue de côté du dispositif de fissuration d'un sol de la figure 10, sur laquelle le coutre est retiré ;
- La figure 12 est encore un autre exemple de dispositif de fissuration d'un sol, vu en perspective,
- La figure 13 représente, vu en perspective, un dispositif de fissuration d'un sol, selon un mode de réalisation de l'invention, et
- La figure 14 est une vue éclatée du dispositif de la figure 13.

Dans les différentes figures, les éléments identiques ou analogues sont désignés par la même référence numérique. À fin de concision de la présente description, ces éléments identiques ou analogues ne sont pas décrits en détails dans chaque exemple, seuls les différences distinguant les exemples étant décrites en détails.

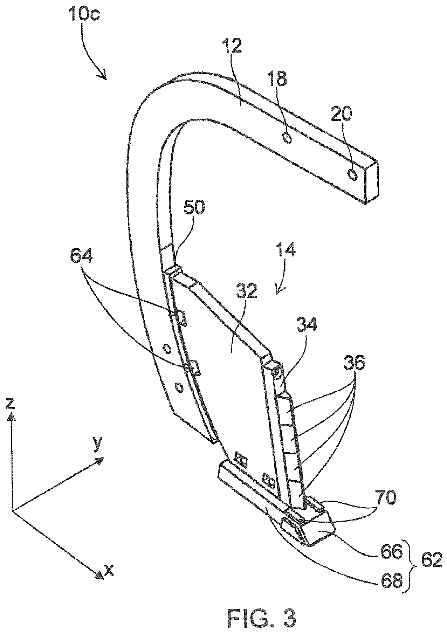

Dans la présente description, les termes « inférieur », « supérieur », « horizontal », « vertical », « avant », « arrière » et « latéral » sont définis par rapport à la position du dispositif de fissuration, tel que représenté sur la figure 3. Sur cette figure, le plan (x,y) correspond à la surface horizontale et z définit la direction verticale. Plus précisément, l'axe x définit la direction longitudinale, l'axe x étant orienté dans la direction d'avancement du dispositif de fissuration en cours d'utilisation. L'axe y définit la direction latérale du dispositif de fissuration, dans laquelle sont mesurées les épaisseurs des différents éléments.

Il est à noter ici que le dispositif de fissuration de la figure 3, par exemple, est représenté posé à l'horizontal sur une pointe, dont la surface inférieure est ici horizontale. Cependant, lors de l'utilisation du dispositif, cette surface inférieure forme classiquement un angle supérieur à 10°, de préférence supérieur à 20° et/ou inférieur à 90°, de préférence inférieur à 50°, de préférence encore inférieur à 40°. La surface inférieure forme par exemple un angle d'environ 25° avec le sol.

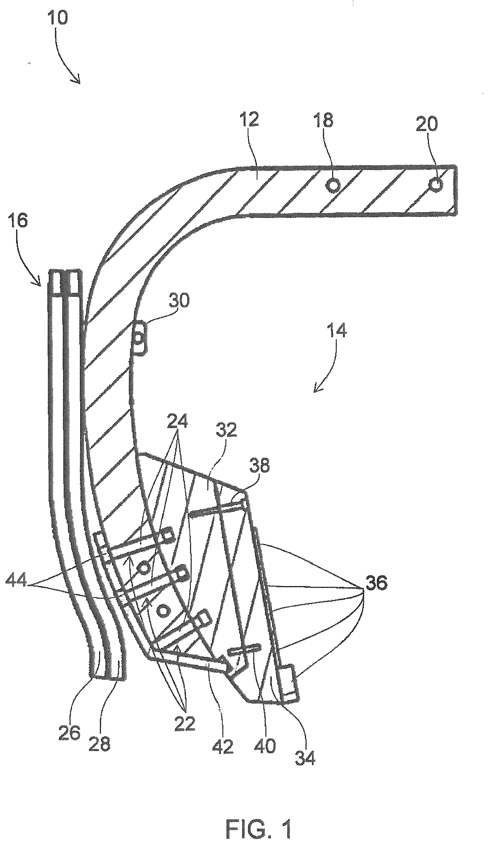

La figure 1 illustre un premier exemple de dispositif de fissuration d'un sol 10, notamment un exemple de déchaumeur ou de décompacteur. Celui-ci comporte essentiellement un étançon 12 sur lequel sont fixés un outil de fissuration 14 et un dispositif de descente de semis 16.

L'étançon 12 présente une forme de virgule ou de « dent en C ». Il présente une partie supérieure s'étendant sensiblement horizontalement, une partie inférieure sur laquelle est fixée l'outil de fissuration, et un tronçon central courbe rejoignant la partie inférieure et la partie supérieure, au niveau duquel peut être fixé le dispositif de descente de semis.

L'étançon peut présenter une épaisseur sensiblement constante, notamment au moins dans sa partie inférieure. L'étançon peut notamment y présenter une section transversale constante, à l'exception d'une partie terminale éventuellement effilée, le cas échéant.

La section transversale de l'étançon peut être sensiblement rectangulaire. La largeur de l'étançon peut être supérieure à 10 mm, de préférence supérieure à 20 mm, et/ou inférieure à 50 mm, de préférence inférieure à 40 mm. La longueur de la section transversale de l'étançon est de préférence supérieure à 30 mm, supérieure à 50 mm, supérieure à 70 mm, et/ou inférieure à 300 mm, inférieure à 150 mm, inférieure à 150 mm, inférieure à 100 mm.

De préférence, l'étançon présente une section transversale de forme rectangulaire sur plus de 50%, de préférence plus de 80%, voire sensiblement 100% de sa longueur. De préférence, l'étançon présente la forme d'un « fer plat », c'est-à-dire dont les deux grandes faces sont sensiblement planes et sensiblement parallèles l'une à l'autre.

L'étançon 12 présente ici deux trous transversaux 18, 20 de fixation de l'étançon 12 sur un dispositif, non représenté, de traction du dispositif de fissuration 10. Bien entendu, le nombre de trous transversaux de fixation de l'étançon sur le dispositif de traction, peut également être égal à 1 ou supérieur à 2.

Tel qu'illustré, l'étançon 12 présente des trous 22 de passage de boulons 24 de fixation de l'outil de fissuration d'un sol 14 sur l'étançon 12. Ici, ces trous 22 sont longitudinaux, c'est-à-dire qu'ils s'étendent selon une direction contenue dans le plan (x, z) de la figure. Les trous 22 sont cylindriques, de section circulaire. Leur section est sensiblement identique, voire légèrement supérieure à celle des boulons 24. L'entraxe entre les trous 22 peut notamment être supérieur à 20 mm, de préférence supérieur à 50 mm et/ou inférieur à 350 mm, de préférence inférieur à 120 mm. On a représenté trois trous sur la figure 1, ce qui est la configuration préférée. Mais un nombre différent de trous peut également être envisagé.

Une fixation de l'outil de fissuration 14 sur l'étançon au moyen de boulons longitudinaux est particulièrement avantageuse.

Tout d'abord, elle permet de s'affranchir d'un support de fixation à joues latérales, les joues étant nécessaires pour une fixation à l'aide de boulons transversaux. L'outil et le dispositif de fissuration sont ainsi plus compacts. L'amélioration de la compacité du dispositif permet de limiter l'effet de levier qu'il crée lorsqu'il est tracté. Ceci représente une amélioration de la sécurité pour l'utilisateur.

En outre, la mise en œuvre de boulons longitudinaux s'étendant longitudinalement dans l'étançon, permet d'augmenter la surface de contact de ces boulons avec l'étançon. On réduit ainsi les risques de matage, le cisaillement est réduit. Le dispositif de fissuration est ainsi plus robuste.

Par ailleurs, tel qu'illustré à la figure 1, le dispositif de descente de semis 16 comporte deux tubes 26, 28 destinés à être reliés à une source de semis. Les deux tubes 26, 28 sont ici sensiblement identiques. Ils sont disposés l'un à la suite de l'autre dans la direction d'avancée du dispositif de fissuration 10. En d'autres termes, l'un des deux tubes est disposé entre l'autre des tubes et l'étançon. En variante, les tubes pourraient être disposés l'un à côté de l'autre, transversalement. Il est également envisageable de n'avoir qu'un tube. Les tubes 26, 28 peuvent être fixés l'un sur l'autre. Les tubes 26, 28 peuvent être fixés sur l'étançon 12 par tout moyen, notamment par une ou plusieurs brides. Ici, un profilé en U 30 est mis en œuvre. Le profilé en U forme un renfoncement de largeur sensiblement égale à la largeur des tubes 26, 28 et recevant ces tubes 26, 28. Chaque extrémité libre du profilé est percée d'un trou, les deux trous étant en regard. Un boulon passant à travers ces deux trous permet de serrer le profilé sur l'étançon 12, du côté opposé de l'étançon, par rapport aux tubes. Les tubes 26, 28 de descente de semis sont ainsi maintenus en position sur l'étançon.

Enfin, l'outil de fissuration 14 comporte, tel qu'illustré, un support 32 de fixation de l'outil de fissuration 14 sur l'étançon 12, et un coutre 34.

Le support de fixation 32 permet de fixer de manière détachable l'outil de fissuration 14 sur l'étançon. Pour ce faire, le support de fixation 32 présente par exemple trois ouvertures circulaires sur son chant arrière, destiné à être en contact avec l'étançon 12, permettant le passage et le serrage des boulons 24. En variante, le support de fixation 32 peut présenter une ouverture circulaire, deux ou plus de trois ouvertures circulaires sur son chant arrière.

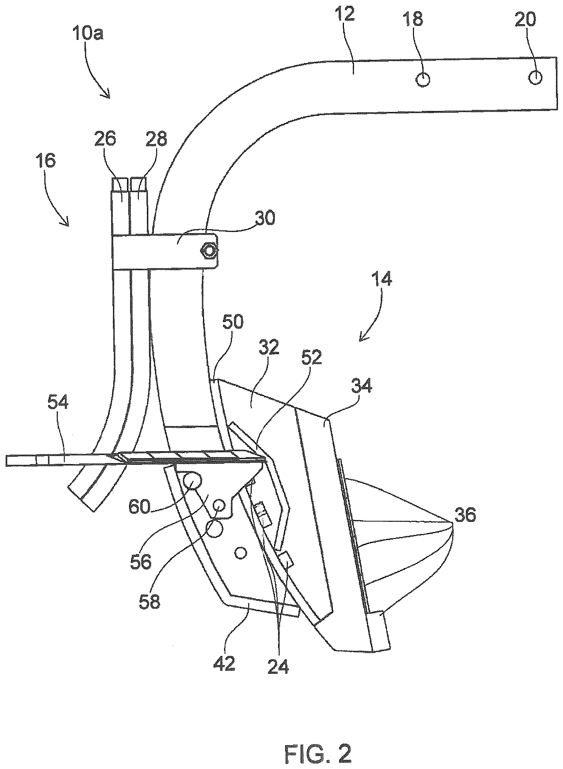

La forme et la fonction du support de fixation 32 sera décrite plus en détails ci-après, en regard de la figure 2.

Le support de fixation peut notamment être en un acier à haute limite élastique, ou « HLE ». Le support de fixation 32 peut comporter des soudures anti-abrasion, notamment de carbure de bore ou de carbure de chrome. Comme évoqué ci-avant, le support de fixation 32 peut être dépourvu de joues latérales s'étendant de chaque côté de l'étançon quand l'outil de fissuration est fixé sur l'étançon. En effet, la fixation de l'outil de fissuration sur l'étançon se fait au moyen de boulons longitudinaux, de préférence encore exclusivement au moyen de boulons longitudinaux.

Le coutre 34 présente lui une pluralité de plaquettes 36 définissant le bord d'attaque de l'outil de fissuration 34. Ces plaquettes sont en un matériau particulièrement rigide, par exemple en carbure de tungstène. À la place des plaquettes 36 ou en combinaison avec les plaquettes, le bord d'attaque du coutre 34 peut être en matériau anti-abrasion, notamment en carbure de bore ou carbure de chrome, le matériau anti-abrasion étant déposée par soudure, arc-plasma ou tout autre procédé de dépôt.

Le coutre 34 est fixé sur le support de fixation 32, de manière détachable ou démontable. Ici, ceci est réalisé à l'aide d'un boulon 38 et d'un axe (ou goupille) 40, ce dernier étant reçu dans des trous borgnes en regard du coutre 34 et du support de fixation 32. La goupille peut être dépourvue de filetage. En variante, plusieurs axes et/ou plusieurs boulons peuvent être mis en œuvre pour fixer le coutre 34 sur le support de fixation 32.

Un tel montage du coutre, de manière détachable, permet un remplacement aisé du coutre uniquement, quand son bord d'attaque est usé, émoussé. On ne remplace donc que la pièce usée, ce qui permet une économie substantielle pour l'utilisateur.

Le coutre 34 forme en outre, tel qu'illustré, un angle recevant une extrémité inférieure du support de fixation 32, par complémentarité de forme. Ce montage permet d'améliorer la stabilité de la fixation du coutre 34 sur le support de fixation 32. En variante cependant, le coutre 34 peut ne pas présenter d'angle recevant l'extrémité inférieure du support de fixation 32, comme visible sur la figure 3.

Il est à noter que la fixation de l'outil de fissuration 14 sur l'étançon 12, est ici réalisée en plaçant une plaque 42 contre le chant arrière de l'étançon, opposé au chant de l'étançon 12 en contact avec le support de fixation 32. Cette plaque 42 est percée de trous 44 recevant les écrous des boulons 24, pour les protéger durant l'utilisation du dispositif de fissuration. L'utilisation d'écrou permet de s'abstenir de tarauder les trous longitudinaux 22. Ces trous 44 formés dans la plaque 42 sont de préférence oblongs pour faciliter la mise en position de la plaque 42, les trous 44 devant être en regard des trous longitudinaux 22. Les boulons mis en œuvre ici peuvent par exemple être des vis hexagonales avec des écrous hexagonaux ou papillons. Ces derniers présentent l'avantage de pouvoir être serrés et desserrés sans nécessiter d'outils.

En variante, cependant, les trous longitudinaux 22 peuvent présenter un taraudage. La plaque 42 peut alors être utile à la protection de l'étançon 12.

L'extrémité inférieure de la plaque 42 est ici reçue dans un logement formé à cet effet dans le support de fixation 32, afin de la protéger en cours d'utilisation de l'outil de fissuration 14.

La figure 2 illustre un second exemple de dispositif de fissuration 10a. Ce dispositif de fissuration comporte sensiblement le même outil de fissuration 14 que le dispositif 10 de la figure 1.

Notamment, le support de fixation 32 est identique. Comme cela est plus nettement visible sur cette figure 2 que sur la figure 1, le support de fixation 32 présente une forme sensiblement plane, d'épaisseur sensiblement égale ou supérieure à l'épaisseur du coutre 34. Cependant, le chant arrière 50 du support de fixation 32 présente une largeur supérieure à la largeur de l'étançon 12 et, ici, à la largeur de la partie plane du support de fixation 32. Ainsi, le support de fixation 32 présente une section transversale en T. La largeur supérieure du chant arrière 50 du support de fixation permet à ce dernier de protéger l'étançon et d'éviter son usure prématurée. Pour ce faire, le chant arrière 50 du support de fixation peut recevoir du carbure de tungstène et/ou du métal anti-abrasion, notamment déposé sous forme de soudure ou tout autre déposé de dépôt. Le métal anti-abrasion peut notamment être du carbure de bore et/ou du carbure de chrome.

En outre, une lame 52 est fixée sur chaque face de la partie plane d'épaisseur réduite du support de fixation 32. Cette lame 52, courbée pour limiter sa trainée, permet de protéger les têtes d'au moins certains des boulons 24, facilitant ainsi leur démontage. Les lames s'étendent de telle manière que leur largeur correspond à une direction transversale du support de fixation 32.

Le dispositif de fissuration 10a de la figure 2 se distingue cependant du dispositif de fissuration 10 de la figure 1 par la présence d'un aileron 54 formant deux ailettes qui s'étendent chacune de part et d'autre de l'étançon 13. Ici, l'aileron 54 est monobloc, les deux ailettes étant réunis par une partie de l'aileron définissant un renfoncement entre les deux ailettes, destiné à recevoir l'étançon 12.

L'aileron 54 présente deux pattes 56 de fixation sur l'étançon 12. Les deux pattes de fixation 56 s'étendent ici sous le corps de l'aileron 54 formant les deux ailettes. En d'autres termes, les deux pattes de fixation 56 s'étendent perpendiculairement vers le bas depuis le corps de l'aileron formant les ailettes. En variante cependant, les deux pattes de fixation 56 peuvent s'étendre vers le haut depuis le corps de l'aileron formant les ailettes, de sorte que les pattes de fixation 56 s'étendent au-dessus du corps de l'aileron formant les ailettes. La fixation de l'aileron est réalisée au moyen d'au moins un boulon 58, ici exactement un boulon 58. En outre, chaque patte 56 présente un renfoncement venant en appui contre un relief transversal 60 formé par l'étançon 12. La fixation de l'aileron 54 est ainsi particulièrement aisée. En variante, le renfoncement de chaque patte 56 vient en appui sur un relief transversal formé par une plaque fixée sur l'étançon 12.

Les ailettes de l'aileron 54 sont ici sensiblement horizontales, permettant ainsi de stabiliser l'outil de fissuration en hauteur en cours d'utilisation. Cependant, elles peuvent également s'étendre de manière inclinée vers l'avant ou vers l'arrière, permettant alors, respectivement, de pousser la terre vers le haut ou vers le bas.

Le dispositif de fissuration 10c de la figure 3 se distingue de celui de la figure 1 essentiellement par la forme du support de fixation 32 de l'outil, par la présence d'une pointe 62 (ou pointe boulonnée) en position inférieure de l'outil et par l'absence de dispositif de descente de semis.

En effet, ici, l'épaisseur du support de fixation 32 est sensiblement constante, égale à l'épaisseur de l'étançon 12 et à l'épaisseur du coutre 34. Ceci présente un mode de réalisation facile à fabriquer. En variante cependant, l'épaisseur du support de fixation est supérieure à l'épaisseur de l'étançon. En variante encore, l'épaisseur du support de fixation 32 est variable. Le support de fixation 32 peut alors notamment présenter des portions d'épaisseur supérieure à l'épaisseur de l'étançon 12, visant à protéger l'étançon.

Cependant, cette figure 3 illustre plus nettement que les figures 1 et 2, les encoches 64 réalisées dans le support de fixation 32 pour recevoir les boulons 24, notamment les têtes de boulon ou les écrous.

Par ailleurs, sous le support de fixation 32, est montée une pointe 62. La pointe 62 est montée de manière démontable sur le support de fixation 32, pour pouvoir être remplacée en cas d'usure. Par exemple, la pointe 62 est fixée sur le support de fixation 32 au moyen de boulons. Cette pointe 62 comporte une tête 66 destinée à former un bord d'attaque de l'outil de fissuration 14 et une tige 68.

Le bord d'attaque de la tête 66 peut notamment être muni de plaques de matériau très résistant comme du carbure de tungstène ou du métal anti-abrasion comme du carbure de bore ou du carbure de chrome. Ce dernier peut être déposé par tout procédé de dépôt, notamment par soudure.

La tige 68 est ici sensiblement parallélépipédique, de largeur supérieure à la largeur du support de fixation 32. Ce dernier peut être guidé en translation entre deux rails 70 sur la surface supérieure de la tige. La tige 68 est par exemple fixée sur le support de fixation 32 à l'aide d'une ou plusieurs vis. Les rails 70 permettent également de limiter les rotations possibles de la pointe 62 par rapport au support de fixation 32, en cours d'utilisation du dispositif de fissuration.

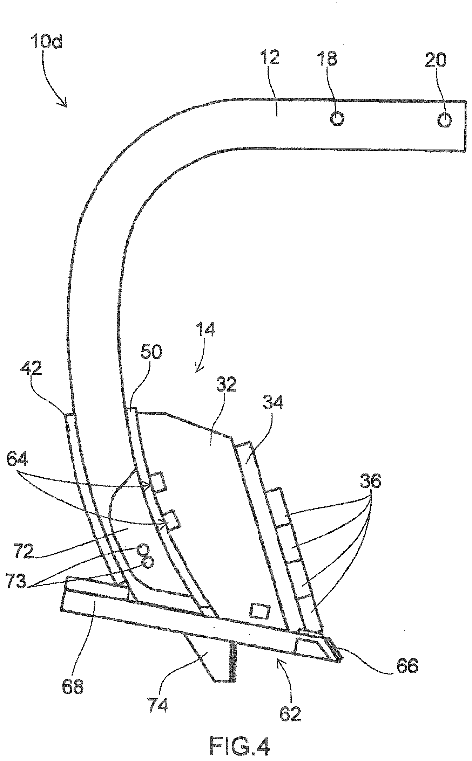

Le dispositif de fissuration 10d de la figure 4 se distingue de celui de la figure 3 essentiellement en ce que le support de fixation 32 présente des languettes latérales 72 permettant de guider en translation l'étançon 12, lors du montage de l'outil de fissuration 14 sur cet étançon 12. Ces languettes s'étendent de préférence sensiblement parallèlement. Les languettes latérales 72 peuvent être percées de trous 73 pour recevoir une ou plusieurs vis ou goupilles traversant l'étançon. Ceci améliore la fixation de l'outil sur l'étançon, en empêchant notamment l'outil de descendre.

En outre, une plaque 42, telle que décrite en regard de l'exemple 10a de la figure 2, est ici prévue à l'arrière de l'étançon 12. Cette plaque 42 peut être fixée, notamment vissée, sur la pointe 42, améliorant ainsi la stabilité de l'outil de fissuration en utilisation.

Enfin, la pointe 62 présente dans l'exemple 10d, un ergot 74, issu de la surface inférieure de la tige 68. Cet ergot 74 forme ainsi un coutre inférieur. Celui-ci présente ici une forme générale trapézoïdale. Son chant avant est recouvert, de préférence, d'un matériau très résistant comme par exemple du carbure de tungstène. Notamment, le chant avant de l'ergot 74 peut être recouvert de plaquettes d'un tel matériau très résistant. Avantageusement, cet ergot est monobloc avec la pointe. Ceci permet d'assurer une liaison particulièrement rigide, étant rappelé que l'ergot 74, tout comme la tête 66 de la pointe 62, sont des parties d'usure de l'outil de fissuration, appelées à s'émousser et à devoir être remplacées. On remplace alors la pointe 62 dans son intégralité.

En variante, l'ergot 74 est fixé de manière démontable sur la pointe 62, plus précisément sur la tige 68 de la pointe 62.

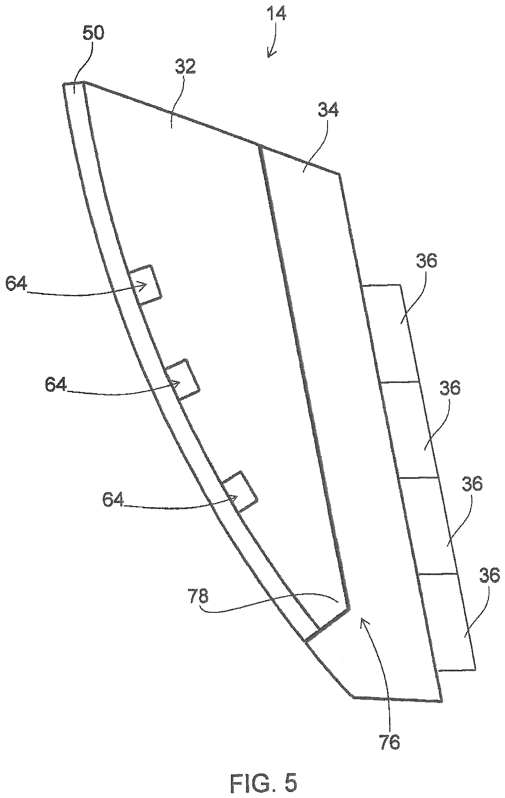

La figure 5 illustre une variante d'outil de fissuration 14. Dans cette variante, le coutre 34 forme un angle 76, recevant l'extrémité inférieure 78 du support de fixation 32. On améliore ainsi la stabilité de la fixation du coutre 34 sur le support de fixation 32. En effet, les vis de fixation et la goupille sont ainsi moins sollicitées, ce qui réduit le risque de défaillance de ces éléments. L'outil de fissuration est alors plus robuste.

Selon une variante, le coutre 34 peut être fixé sur le support de fixation 32 par soudure.

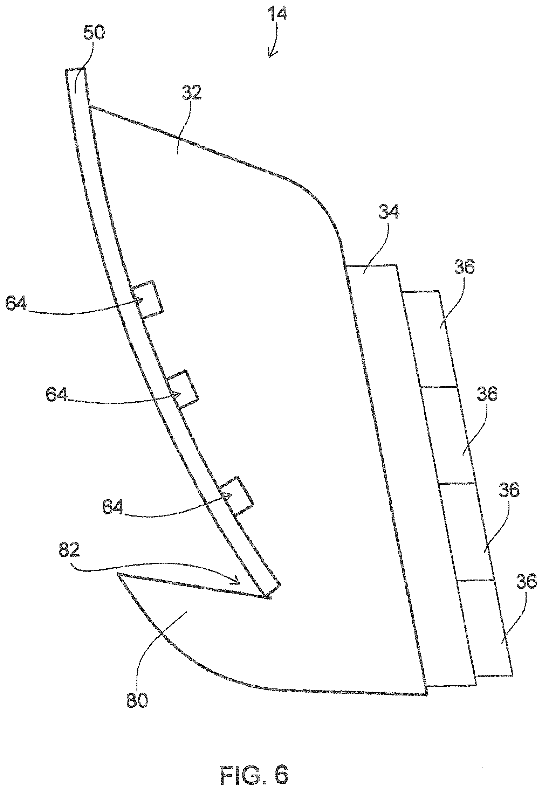

L'outil de fissuration 14 de la figure 6 se distingue du fait que le support de fixation 32 présente une partie 80 s'étendant longitudinalement vers l'arrière et formant un angle 82. Cet angle 82 est de préférence de forme sensiblement complémentaire à l'extrémité de l'étançon 12 qu'il reçoit, assurant ainsi un blocage en position de l'étançon par rapport à l'outil de fissuration, par complémentarité de forme. Un tel dispositif présente une stabilité accrue. Le coutre 34 peut être tenu par une ou plusieurs goupilles ou vis, ou être soudé sur le support de fixation 32.

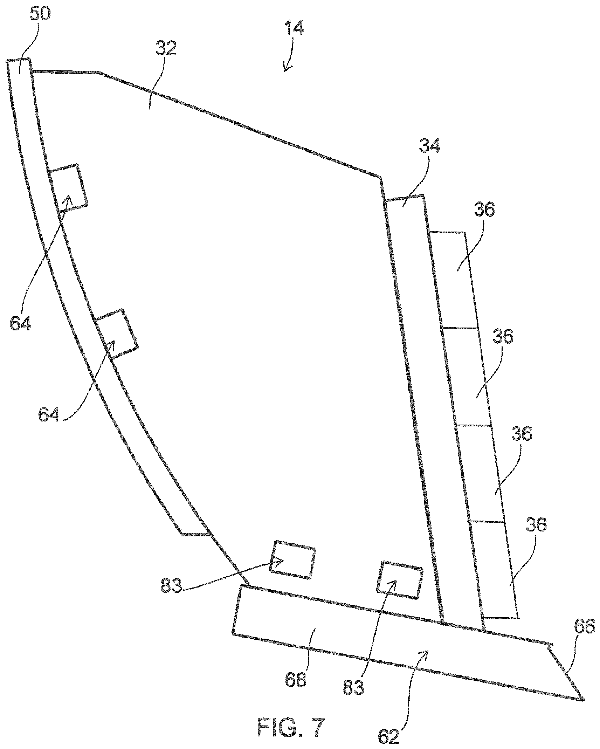

L'outil de fissuration 14 de la figure 7 se distingue de celui représenté en figure 4 essentiellement par son système de fixation de la pointe 62 sur le support de fixation 32. Ici, en effet, la tige 68 peut être munie d'un ou plusieurs trous oblongs dans le sens de la longueur de la tige 68, le support de fixation 32 étant muni de trous ronds. Une telle forme des trous permet de régler la position longitudinale de la pointe 62 par rapport au support de fixation 32 et donc par rapport au bord d'attaque du coutre 34. Un tel montage permet notamment d'avancer ou de reculer la tête 66 de la pointe 62 par rapport au bord d'attaque du coutre 34, en fonction du besoin et/ou de l'usure de la tête 66 de la pointe 62. Les encoches 83 reçoivent alors la tête des boulons ou des vis utilisés pour fixer la pointe 62 sur le support de fixation 32. En variante, les encoches 83 reçoivent des écrous hexagonaux ou des écrous papillons mis en œuvre avec des vis ou des tiges filetées pour fixer la pointe 62 sur le support de fixation 32.

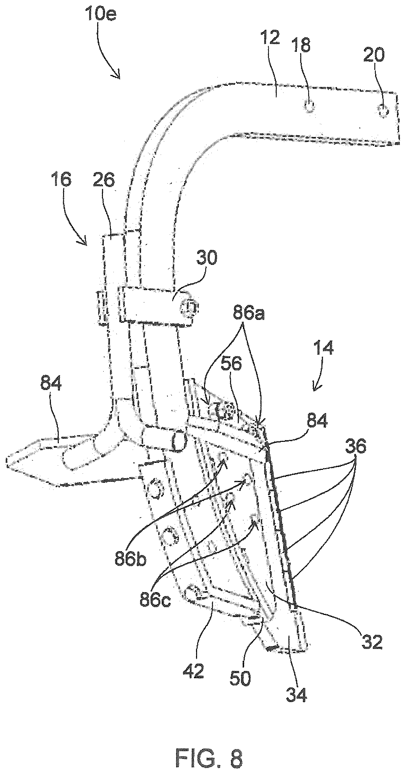

Le dispositif de fissuration 10e de la figure 8 se distingue des exemples déjà décrits essentiellement par la forme du dispositif de descente de semis 16 et des ailettes 84.

Le dispositif de descente des semis 16 est en effet réalisé, ici, par un unique tube 26 en Y. En d'autres termes, le tube 26 présente une unique entrée, mais deux sorties disposées de part et d'autre d'un plan médian longitudinal du dispositif de fissuration 10e. Le nombre de sorties du dispositif de descente des semis 16 n'est pas limitatif. La position longitudinale et/ou en hauteur des deux sorties du dispositif de descente des semis peut également varier. L'orientation des deux sorties, vers l'avant ou vers l'arrière du dispositif de fissuration, et/ou vers le bas ou vers le haut peut également être choisie pour régler la largeur du semi.

Par ailleurs, ici, les ailettes 84 sont distinctes. En d'autres termes, il n'y a pas un aileron unique formant les deux ailettes, mais deux ailettes, formées par deux pièces séparées, fixées ensemble au support de fixation 32, par exemple au moyen de boulons. Un tel montage est parfois préféré. Ici, chaque ailette 84 présente une patte de fixation 56. Chaque patte de fixation 56 s'étend ici au-dessus de l'ailette 84. En d'autres termes, chaque patte de fixation 56 s'étend perpendiculairement vers le haut depuis l'ailette 84. En variante cependant, chaque patte de fixation 56 s'étend vers le bas depuis l'ailette 84 associée, de sorte que les pattes de fixation 56 s'étendent au-dessous des ailettes 84.

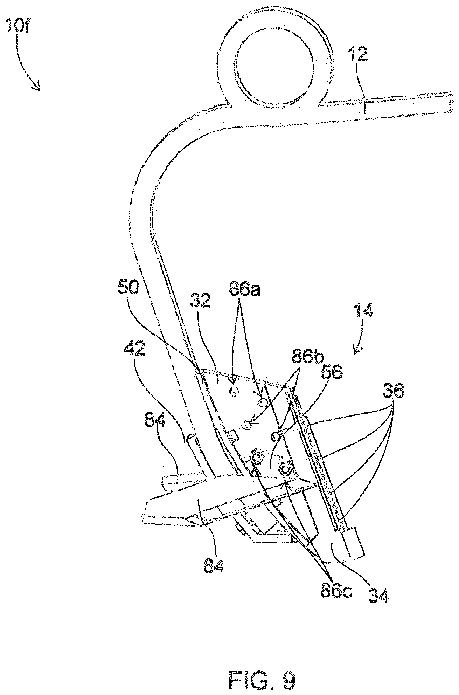

En outre, le support de fixation 32 présente ici plusieurs séries de deux trous 86a, 86b, 86c, en l'espèce trois séries de deux trous, réparties selon la hauteur du support de fixation 32. Ceci permet de régler la hauteur des ailettes, comme illustré par la comparaison des figures 8 et 9 par exemple (la figure 9 se distingue de la figure 8 uniquement par un système différent de fixation de l'étançon 12 sur le dispositif de traction). Bien entendu, il peut être prévu plus ou moins de trois séries de deux trous, correspondant à autant de réglages possibles en hauteur des ailettes.

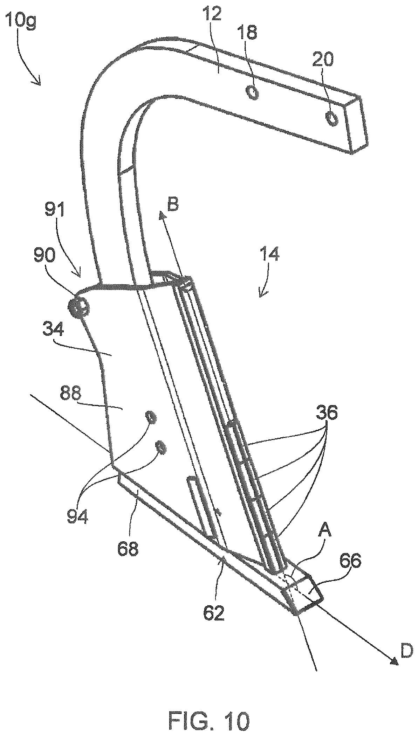

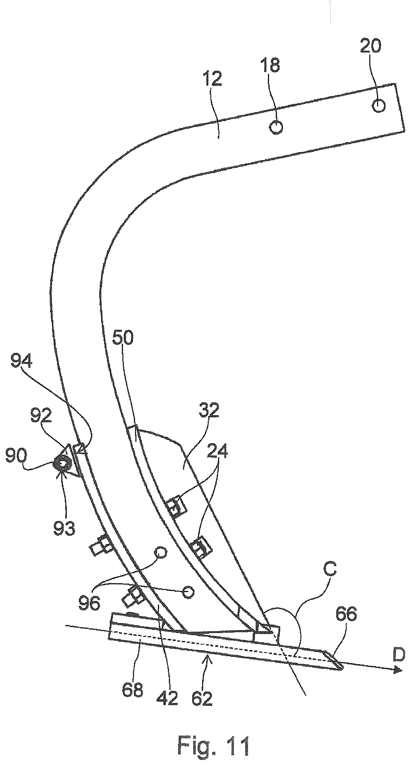

Le dispositif de fissuration 10g des figures 10 et 11 se distingue des autres exemples décrits, essentiellement en ce que le coutre présente ici deux joues latérales 88 s'étendant depuis le bord d'attaque 36 du coutre, vers l'arrière. Le coutre 34 avec ses joues latérales 88 forme ainsi une chaussette. Les deux joues latérales 88 forment ainsi un logement de réception du support de fixation 32 et de l'étançon 12, qui sont ainsi protéger du flux de terre créé par le dispositif de fissuration lorsqu'il est tracté. On peut noter ici que les joues latérales 88 peuvent être démontées de la partie frontale 89 du coutre 34, formant le bord d'attaque.

La fixation du coutre 34 est également différente ici, par rapport aux exemples décrits précédemment. Ainsi, le coutre 34 avec ses joues latérales 88 est posé en appui sur le support de fixation 32, essentiellement selon une direction d'avancée du dispositif de fissuration 10g. Les joues enserrent le support de fixation 32, assurant le montage relatif du support de fixation 32 et du coutre 34. Le coutre 34 est également en appui sur la pointe 62, fixée sur le support de fixation 32. En variante, si l'outil de fissuration est dépourvue de pointe 62, le coutre 34 peut être en appui sur une portion du support de fixation 32 faisant saillie dans la direction d'avancée du dispositif de fissuration. Selon encore une autre variante, le coutre 34 est fixé sur le support de fixation 32 au moyen d'un ou plusieurs boulons de fixation et/ou d'une ou plusieurs goupilles, comme décrit en regard de la figure 1.

Cependant, ici, le coutre 34 est également fixé au moyen d'un boulon 90 s'étendant transversalement entre les deux extrémités arrières 91 des joues latérales 88. Le boulon 90 s'étend ainsi d'un côté de l'étançon 12, opposé à celui dans lequel s'étend le bord d'attaque 36 du coutre 34. Le bord d'attaque 36 du coutre 34 peut, ici aussi, être recouvert de carbure de tungstène et/ou de matériau anti-abrasion, type carbure de bore ou carbure de chrome, déposé par tout procédé, notamment par soudure.

En variante, le coutre 34 peut être fixé au moyen de plusieurs boulons s'étendant transversalement. En outre, le ou les boulons s'étendant transversalement peuvent être disposés devant et/ou derrière l'étançon 12.

Tel qu'illustrée sur la figure 11, une pièce d'appui 92 peut également être prévue ici, pour améliorer la stabilité du montage du coutre par rapport au dispositif de fissuration 10g. La pièce d'appui 92, reçue également entre les deux joues latérales 88 du coutre 34, présente un trou traversant 93 recevant le boulon 90 et une surface d'appui 94, en contact avec le chant arrière de la plaque 42 fixée sur le chant arrière de l'étançon 12.

Par ailleurs, les joues latérales 88 présentent, telles qu'illustrées, deux trous transversaux 94, chaque trou transversal pouvant recevoir un boulon ou goupille (non représenté) traversant l'étançon 12. L'étançon 12 présente en effet, dans l'exemple illustré aux figures 10 et 11, deux trous transversaux 96 de réception d'un tel boulon. Bien entendu, le nombre de deux boulons ou goupilles transversaux est illustratif. Un seul boulon ou goupille transversal(e) peut être mis en œuvre ou plus de deux boulons ou goupilles. Ce ou ces boulons ou goupilles supplémentaires, optionnels, permettent d'améliorer encore la fixation du coutre 34 sur le dispositif 10g de fissuration d'un sol.

Enfin, le coutre 34 peut avoir une largeur, correspondant à la distance maximale entre les deux joues latérales 88, mesurée sensiblement horizontalement dans un plan transversal, supérieure à 20 mm et/ou inférieure à 100 mm, notamment inférieure à 80 mm.

L'angle A entre une direction longitudinale D de la pointe 62 et la direction B du bord d'attaque 36 est de préférence compris entre 15 et 160°. Ceci peut notamment être réalisé lorsque l'angle C, entre le chant avant du support de fixation 32 et la direction longitudinale D de la pointe, est compris entre 15 et 160 °.

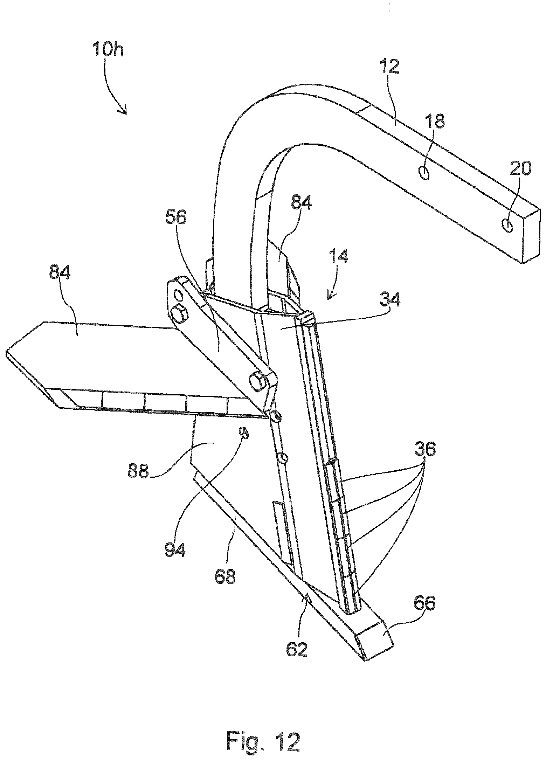

Enfin, la figure 12 illustre un dernier exemple d'outil de fissuration 10h.

Ici, les ailettes 84 sont distinctes. En d'autres termes, il n'y a pas un aileron unique formant les deux ailettes, mais deux ailettes, formées par deux pièces séparées, fixées ensemble aux joues 88 du coutre 34, par exemple au moyen de boulons. Un tel montage est parfois préféré. Ici, chaque ailette 84 présente une patte de fixation 56. Chaque patte de fixation 56 s'étend ici au-dessus de l'ailette 84. En d'autres termes, chaque patte de fixation 56 s'étend perpendiculairement vers le haut depuis l'ailette 84. En variante cependant, chaque patte de fixation 56 s'étend vers le bas depuis l'ailette 84 associée, de sorte que les pattes de fixation 56 s'étendent au-dessous des ailettes 84.

En outre, les joues 88 présentent ici plusieurs séries de trous, par exemple trois séries de trous, réparties selon la hauteur des joues. Ceci permet de régler la hauteur et/ou l'inclinaison des ailettes. Bien entendu, il peut être prévu plus ou moins de trois séries de trous, correspondant à autant de réglages possibles en hauteur et/ou en inclinaison des ailettes. Le nombre de trous des pattes de fixation n'est pas limitatif. Pour améliorer la stabilité des ailettes, cependant, on préfère avoir au moins deux trous de fixation, situés de part et d'autre de l'étançon. Il est à noter ici, que des trous correspondants et/ou des encoches correspondantes peuvent être prévus dans le support de fixation 32 pour permettre le passage des vis ou des goupilles permettant la fixation des joues ensemble et/ou des ailettes sur les joues.

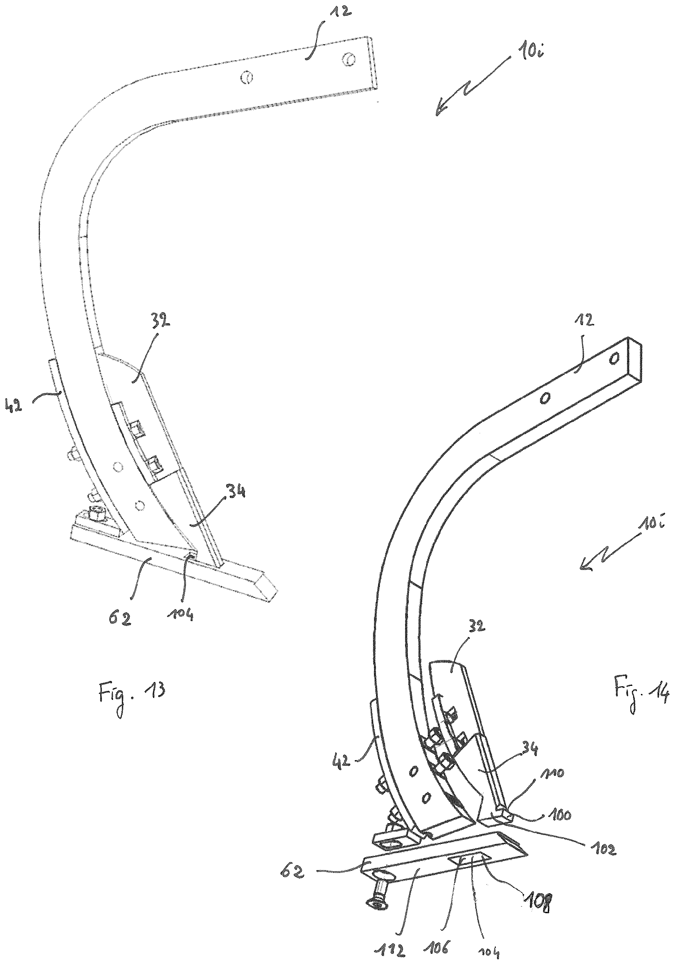

Le dispositif de fissuration des figures 13 et 14 se distingue du dispositif de fissuration de la figure 3 essentiellement par le fait que la pointe 62 est fixée à la fois au coutre 34 et à l'étançon 12. Le coutre 34 est monté amovible sur le support de fixation 32, par exemple par encliquetage. Le coutre 34 présente une languette 100 faisant saillie selon la direction longitudinale de l'extrémité inférieure 102 du coutre. L'extrémité inférieure 102 du coutre, et en particulier la languette, est disposée dans un logement 104 formé dans la pointe.

Le logement 104 comporte un trou 106 de section rectangulaire traversant la pointe selon sa hauteur. Le trou peut présenter une section de forme variée, dès lors que les dimensions de la section sont adaptées à l'insertion de l'extrémité inférieure du coutre, et notamment de la languette, dans le logement. Le trou se prolonge par un évidement 108 s'étendant selon la direction longitudinale et conformé pour recevoir la languette. La face supérieure 110 de la languette forme ainsi une butée limitant, voire de préférence bloquant le déplacement de la pointe 62 par rapport au coutre 34 et au support de fixation 32, selon la direction verticale. La résistance à l'arrachement de la pointe du coutre est ainsi améliorée par rapport à une fixation par vis de la pointe sur le coutre.

Dans l'exemple des figures 13 et 14, le logement débouche sur la face inférieure 112 de la pointe. Dans une variante non représentée, le logement peut être borgne. La languette est alors logée dans l'évidement à la manière d'un tenon dans une mortaise.

Par ailleurs, la pointe 62 peut être vissée sur la plaque 42, comme cela a déjà été décrit précédemment pour décrire le dispositif de fissuration de la figure 4.

Bien entendu, l'invention n'est pas limitée aux exemples décrits et représentés, fournis à titre d'exemples illustratifs et non limitatifs.

Notamment, les différents exemples décrits ci-avant peuvent être combinés.

Un dispositif de descente de semis et/ou une pointe et/ou un coutre inférieur peuvent notamment être ajoutés ou supprimés dans tous les exemples de réalisation décrits ici. Le dispositif de descente de semis est réglable en hauteur. Notamment, la hauteur du dispositif de descente de semis peut être réglée pour que les semis soient déversés :
- au-dessus du flux de terre formé par les ailettes lorsque le dispositif de fissuration est tracté ;
- au-dessous du flux de terre formé par les ailettes lorsque le dispositif de fissuration est tracté ; ou
- dans du flux de terre formé par les ailettes lorsque le dispositif de fissuration est tracté.

## Revendications

1. Dispositif de fissuration d'un sol, choisi parmi un déchaumeur et décompacteur, le dispositif comportant un étançon (12) sur lequel est fixé un outil de fissuration (10 ; 10a ; 10c ; 10d ; 10e ; 10f ; 10g), l'outil comportant un support de fixation (32), pour fixer de manière détachable l'outil sur l'étançon (12), et un coutre (34), monté de manière détachable sur le support de fixation (32),
dispositif **caractérisé en ce que** l'étançon (12) présente des trous (22) longitudinaux de passage de boulons (24) de fixation de l'outil de fissuration (14) sur l'étançon, lesdits trous longitudinaux de passage débouchant sur le chant arrière de l'étançon, et le support de fixation présentant des trous longitudinaux de réception desdits boulons, lesdits trous longitudinaux de réception débouchant sur le chant arrière (50) dudit support de fixation,
le dispositif de fissuration comportant en outre une plaque (42) fixée sur le chant arrière de l'étançon au moyen desdits boulons (24), ladite plaque :
- comprenant une extrémité inférieure reçue dans un logement formé à cet effet dans le support de fixation ou
- étant fixée sur une pointe (62) comprenant une tête (66) destinée à former un bord d'attaque de l'outil de fissuration et une tige (68), ladite pointe étant fixée sur une extrémité inférieure du support de fixation ou sur le coutre.

2. Dispositif de fissuration selon la revendication 1, dans lequel le coutre (34) comporte un bord d'attaque (36), de préférence en carbure de tungstène.

3. Dispositif de fissuration selon la revendication 1 ou 2, dans lequel le coutre (34) est fixé sur le support de fixation (32) au moyen d'au moins une vis (38) traversant un trou dans le coutre et reçue dans un taraudage du support de fixation (32) et/ou d'au moins une goupille (40) reçue dans des trous borgnes réalisés dans le coutre (34) et le support de fixation (32).

4. Dispositif de fissuration selon l'une des revendications 1 à 3, dans lequel le coutre (34) forme un renfoncement (76) recevant une extrémité (76) du support de fixation (32), destinée à être orientée vers le fond du sol à fissurer.

5. Dispositif de fissuration selon l'une quelconque des revendications précédentes, dans lequel le support de fixation (32) comporte une portion sensiblement plane, sur laquelle est fixée le coutre le cas échéant, et un bord, de préférence plus large, formant le chant arrière (50) du support de fixation (32), destiné à être en contact avec l'étançon (12) et/ou le support de fixation (32) présentant de préférence des encoches (64) dans lesquels débouchent les trous longitudinaux (22).

6. Dispositif de fissuration selon l'une quelconque des revendications précédentes, dans lequel le support de fixation (32) présente des reliefs (52) dont la largeur s'étend perpendiculairement au plan médian du support de fixation (32), pour protéger les têtes des boulons de fixation de l'outil sur l'étançon (32), les reliefs étant par exemple réalisés au moyen de lames (52) fixées sur le support de fixation (32).

7. Dispositif de fissuration selon l'une quelconque des revendications précédentes dans lequel la pointe (62) est fixée sur l'extrémité inférieure du support de fixation (32), les moyens de fixation de la pointe (62) sur le support de fixation (32) permettant de régler la position de la tête (66) de la pointe (62), par rapport au coutre (34) le cas échéant.

8. Dispositif de fissuration selon l'une quelconque des revendications précédentes, dans lequel l'outil comporte un ergot (74) présentant un bord d'attaque, disposé sous le support de fixation (32) en cours d'utilisation de l'outil, l'ergot (74) étant par exemple monobloc avec la pointe (62), le cas échéant.

9. Dispositif de fissuration selon l'une quelconque des revendications précédentes, dans lequel le support de fixation (32) présente des languettes latérales (72) définissant avec le chant arrière (50) du support de fixation (32) un logement de réception de l'étançon (12).

10. Dispositif de fissuration selon l'une quelconque des revendications précédentes, dans lequel l'outil comporte au moins une, de préférence deux ailettes (84) s'étendant de part et d'autre du support de fixation (32), les ailettes (32) étant de préférence fixées ensemble sur le support de fixation (32),

11. Dispositif de fissuration selon la revendication 10, dans lequel les ailettes (84) peuvent être fixées à différente hauteur sur le support de fixation (32), ce dernier présentant par exemple plusieurs séries de trous (86a, 86b, 86c) aptes à être traverser par des boulons de fixation des ailettes (84) et/ou dans lequel les ailettes sont monoblocs, définissant un aileron (54) présentant, de préférence, un renfoncement entre les deux ailettes pour recevoir l'étançon (12).

12. Dispositif de fissuration selon l'une quelconque des revendications précédentes, dans lequel le coutre (32) présente deux joues latérales s'étendant dans une direction opposée au bord d'attaque (36), le support de fixation (32), et l'étançon (12) le cas échéant, s'étendant entre les deux joues latérales.

13. Dispositif de fissuration selon l'une quelconque des revendications précédentes, comportant un dispositif de descente de semis (16), présentant de préférence au moins un orifice d'alimentation en semis, par exemple deux orifices d'alimentation en semis, et au moins un orifice de sortie pour les semis, notamment deux orifices de sortie pour les semis.

14. Dispositif de fissuration selon l'une quelconque des revendications 1 à 12, dans lequel le coutre (34) est fixé au moyen d'un boulon s'étendant entre ses deux joues, le boulon étant disposé d'un côté de l'étançon opposé au bord d'attaque (36) du coutre (34), une pièce d'appui étant de préférence montée sur le boulon et prenant appui sur le chant arrière de l'étançon ou de la plaque fixée sur le chant arrière de l'étançon.

## Patentansprüche

1. Vorrichtung zum Aufreißen eines Bodens, welche aus einem Schälpflug und einem Bodenlockerer ausgewählt ist, wobei die Vorrichtung einen Steg (12) umfasst, an welchem ein Aufreißwerkzeug (10; 10a; 10c; 10d; 10e; 10f; 10g) befestigt ist, wobei das Werkzeug eine Montagehalterung (32), um das Werkzeug lösbar an dem Steg (12) zu befestigen, und ein Sech (34), das lösbar an der Montagehalterung (32) angebracht ist, umfasst,
wobei die Vorrichtung **dadurch gekennzeichnet ist, dass** der Steg (12) Längslöcher (22) für das Durchführen von Bolzen (24) zur Befestigung des Aufreißwerkzeugs (14) am Steg aufweist, wobei die Längslöcher zum Durchführen an der Hinterkante des Steges münden, und wobei die Montagehalterung Längslöcher zur Aufnahme der Bolzen aufweist, wobei die Längslöcher zur Aufnahme an der Hinterkante (50) der Montagehalterung münden,
wobei die Vorrichtung zum Aufreißen außerdem eine Platte (42) aufweist, die mittels der Bolzen (24) an der Hinterkante des Steges befestigt ist, wobei die Platte:
- ein unteres Ende umfasst, das in einer Aufnahme aufgenommen ist, die zu diesem Zweck in der Montagehalterung ausgebildet ist, oder
- an einem Meißel (62) befestigt ist, der ein Kopfstück (66), das dazu bestimmt ist, eine Vorderkante des Aufreißwerkzeugs zu bilden, und eine Stange (68) umfasst, wobei der Meißel an einem unteren Ende der Montagehalterung oder an dem Sech befestigt ist.

2. Vorrichtung zum Aufreißen nach Anspruch 1, wobei das Sech (34) eine Vorderkante (36) aufweist, vorzugsweise aus Wolframcarbid.

3. Vorrichtung zum Aufreißen nach Anspruch 1 oder 2, wobei das Sech (34) an der Montagehalterung (32) mittels wenigstens einer Schraube (38), die ein Loch in dem Sech durchquert und in einem Innengewinde der Montagehalterung (32) aufgenommen ist, und/oder wenigstens eines Stiftes (40), der in Blindlöchern aufgenommen ist, die in dem Sech (34) und der Montagehalterung (32) hergestellt sind, befestigt ist.

4. Vorrichtung zum Aufreißen nach einem der Ansprüche 1 bis 3, wobei das Sech (34) eine Aussparung (76) bildet, die ein Ende (76) der Montagehalterung (32) aufnimmt, das dazu bestimmt ist, der Unterseite des aufzureißenden Bodens zugewandt zu sein.

5. Vorrichtung zum Aufreißen nach einem der vorhergehenden Ansprüche, wobei die Montagehalterung (32) einen im Wesentlichen ebenen Abschnitt, an welchem gegebenenfalls das Sech befestigt ist, und einen vorzugsweise breiteren Rand, der die Hinterkante (50) der Montagehalterung (32) bildet, die dazu bestimmt ist, sich mit dem Steg (12) in Kontakt zu befinden, umfasst, und/oder wobei die Montagehalterung (32) vorzugsweise Ausnehmungen (64) aufweist, in welche die Längslöcher (22) münden.

6. Vorrichtung zum Aufreißen nach einem der vorhergehenden Ansprüche, wobei die Montagehalterung (32) Erhöhungen (52) aufweist, deren Breite sich senkrecht zur Mittelebene der Montagehalterung (32) erstreckt, um die Köpfe der Bolzen zur Befestigung des Werkzeugs am Steg (32) zu schützen, wobei die Erhöhungen zum Beispiel mithilfe von Plättchen (52) hergestellt sind, die an der Montagehalterung (32) befestigt sind.

7. Vorrichtung zum Aufreißen nach einem der vorhergehenden Ansprüche, wobei der Meißel (62) am unteren Ende der Montagehalterung (32) befestigt ist, wobei die Mittel zur Befestigung des Meißels (62) an der Montagehalterung (32) ermöglichen, gegebenenfalls die Position des Kopfstücks (66) des Meißels (62) bezüglich des Seches (34) zu verstellen.

8. Vorrichtung zum Aufreißen nach einem der vorhergehenden Ansprüche, wobei das Werkzeug einen eine Vorderkante aufweisenden Ansatz (74) umfasst, der während der Verwendung des Werkzeugs unter der Montagehalterung (32) angeordnet ist, wobei der Ansatz (74) gegebenenfalls zum Beispiel mit dem Meißel (62) einstückig ausgebildet ist.

9. Vorrichtung zum Aufreißen nach einem der vorhergehenden Ansprüche, wobei die Montagehalterung (32) seitliche Zungen (72) aufweist, die mit der Hinterkante (50) der Montagehalterung (32) einen Aufnahmeraum zur Aufnahme des Steges (12) definieren.

10. Vorrichtung zum Aufreißen nach einem der vorhergehenden Ansprüche, wobei das Werkzeug wenigstens einen, vorzugsweise zwei Flügel (84) aufweist, die sich beiderseits der Montagehalterung (32) erstrecken, wobei die Flügel (32) vorzugsweise zusammen an der Montagehalterung (32) befestigt sind.

11. Vorrichtung zum Aufreißen nach Anspruch 10, wobei die Flügel (84) auf verschiedenen Höhen an der Montagehalterung (32) befestigt sein können, wobei diese Letztere zum Beispiel mehrere Reihen von Löchern (86a, 86b, 86c) aufweist, die geeignet sind, von Befestigungsbolzen der Flügel (84) durchquert zu werden, und/oder wobei die Flügel einstückig sind, wobei sie eine Schaufel (54) definieren, die vorzugsweise eine Aussparung zwischen den zwei Flügeln aufweist, um den Steg (12) aufzunehmen.

12. Vorrichtung zum Aufreißen nach einem der vorhergehenden Ansprüche, wobei das Sech (32) zwei seitliche Wangen aufweist, die sich in einer zur Vorderkante (36) entgegengesetzten Richtung erstrecken, wobei sich die Montagehalterung (32) und gegebenenfalls der Steg (12) zwischen den zwei seitlichen Wangen erstrecken.

13. Vorrichtung zum Aufreißen nach einem der vorhergehenden Ansprüche, welche eine Vorrichtung zur Ausbringung von Samen (16) umfasst, die vorzugsweise wenigstens eine Öffnung zur Zuführung von Samen, zum Beispiel zwei Öffnungen zur Zuführung von Samen, und wenigstens eine Austrittsöffnung für die Samen, insbesondere zwei Austrittsöffnungen für die Samen aufweist.

14. Vorrichtung zum Aufreißen nach einem der Ansprüche 1 bis 12, wobei das Sech (34) mittels eines Bolzens befestigt ist, der sich zwischen seinen zwei Wangen erstreck, wobei der Bolzen auf einer der Vorderkante (36) des Seches (34) gegenüberliegenden Seite des Steges angeordnet ist, wobei ein Stützteil vorzugsweise auf dem Bolzen angebracht ist und sich an der Hinterkante des Steges oder der an der Hinterkante des Steges befestigten Platte abstützt.

## Claims

1. Ripper device for opening cracks in the soil, selected from a stubble clearer and a decompactor, the device comprising a leg (12) to which a ripper tool (10; 10a; 10c; 10d; 10e; 10f; 10g) is attached, the tool comprising an attachment support (32), for detachably attaching the tool to the leg (12), and a coulter (34), mounted detachably on the attachment support (32),
the device being **characterized in that** the leg (12) has longitudinal passage holes (22) for the passage of fixing bolts (24) for attaching the ripper tool (14) to the leg,
the said longitudinal passage holes opening onto the rear edge face of the leg, and the attachment support having longitudinal holes for receiving the said bolts, the said longitudinal receiving holes opening onto the rear edge face (50) of the said attachment support,
the ripper device further comprising a plate (42) attached to the rear edge face of the leg by means of the said bolts (24), the said plate:
- comprising a lower end received in a housing formed for that purpose in the attachment support, or
- being attached to a spike (62) comprising a head (66) intended to form a leading edge of the ripper tool and a shank (68), the said spike being attached to a lower end of the attachment support or to the coulter.

2. Ripper device according to Claim 1, in which the coulter (34) comprises a leading edge (36), preferably made of tungsten carbide.

3. Ripper device according to Claim 1 or 2, in which the coulter (34) is attached to the attachment support (32) by means of at least one screw (38) passing through a hole in the coulter and housed in a tapping in the attachment support (32) and/or of at least one pin (40) received in blind holes formed in the coulter (34) and the attachment support (32).

4. Ripper device according to one of Claims 1 to 3, in which the coulter (34) forms an indentation (76) receiving one end (76) of the attachment support (32), which end is intended to face towards the bottom of the ground that it is to be ripped open.

5. Ripper device according to any one of the preceding claims, in which the attachment support (32) comprises a substantially planar portion to which the coulter, where appropriate, is attached, and an edge, preferably broader, forming the rear edge face (50) of the attachment support (32), intended to be in contact with the leg (12) and/or the attachment support (32) preferably having notches (64) into which the longitudinal holes (22) open.

6. Ripper device according to any one of the preceding claims, in which the attachment support (32) has reliefs (52) on which the width extends perpendicular to the mid plane of the attachment support (32), to protect the heads of the fixing bolts used to attach the tool to the leg (32), the reliefs being, for example, produced in the form of leaves (52) attached to the attachment support (32).

7. Ripper device according to any one of the preceding claims, in which the spike (62) is attached to the lower end of the attachment support (32), the means for attaching the spike (62) to the attachment support (32) allowing the position of the head (66) of the spike (62) with respect to the coulter (34), where applicable, to be adjusted.

8. Ripper device according to any one of the preceding claims, in which the tool comprises a lug (74) having a leading edge, positioned beneath the attachment support (32) when the tool is in use, the lug (74) being, for example, of one piece with the spike (62), where applicable.

9. Ripper device according to any one of the preceding claims, in which the attachment support (32) has lateral tabs (72) which, with the rear edge face (50) of the attachment support (32), define a housing to receive the leg (12).

10. Ripper device according to any one of the preceding claims, in which the tool comprises at least one, preferably two, wings (84) extending on either side of the attachment support (32), the wings (32) preferably being attached to the attachment support (32) together.

11. Ripper device according to Claim 10, in which the wings (84) can be attached to the attachment support (32) at different heights, this support having, for example, several series of holes (86a, 86b, 86c) through which bolts for attaching the wings (84) can pass and/or in which the wings are of one piece, defining a fin (54) preferably having an indentation between the two wings in order to accept the leg (12) .

12. Ripper device according to any one of the preceding claims, in which the coulter (32) has two lateral cheeks extending in the opposite direction to the leading edge (36), the attachment support (32) and the leg (12) where appropriate extending between the two lateral cheeks.

13. Ripper device according to any one of the preceding claims comprising a seed dropping device (16), preferably having at least one seed feed orifice, for example two seed feed orifices, and at least one seed outlet orifice, notably two seed outlet orifices.

14. Ripper device according to any one of Claims 1 to 12, in which the coulter (34) is attached by means of a bolt extending between its two cheeks, the bolt being positioned on a side of the leg that is the opposite side to the leading edge (36) of the coulter (34), a bearer preferably being mounted on the bolt and bearing against the rear edge face of the leg or of the plate attached to the rear edge face of the leg.
